Europäisches Patentamt

European Patent Office

Office européen des brevets

(11) Publication number: **0 126 534**
**A1**

(12)

# EUROPEAN PATENT APPLICATION

(21) Application number: **84302250.0**

(51) Int. Cl.³: **E 21 D 21/00**

(22) Date of filing: **02.04.84**

---

(30) Priority: **26.04.83 GB 8311365**
**26.04.83 GB 8311366**

(43) Date of publication of application: **28.11.84**
**Bulletin 84/48**

(84) Designated Contracting States: **AT BE CH DE FR GB IT LI LU NL SE**

(71) Applicant: **FOSROC INTERNATIONAL LIMITED, 285 Long Acre, Nechells Birmingham B7 5JR (GB)**

(72) Inventor: **Cranko, Ernest Edward, 12 Beryl Street, Carletonville 2500 Transvaal (ZA)**
Inventor: **Haigh, Jeffrey George, 2 Plantation Road, Leighton Buzzard Bedfordshire (GB)**

(74) Representative: **Shaw, Laurence, George House George Road, Edgbaston Birmingham B15 1PG (GB)**

---

(54) **Improved anchoring capsule containing self-setting composition.**

(57) A frangible capsule (1) housing at least one interactive component of a self setting composition is bounded by a wall which, according to the invention includes areas of weakening e.g. slits (4), to encourage breaking up of the wall when an anchor element is urged into the capsule.

EP 0 126 534 A1

ACTORUM AG

## IMPROVED ANCHORING CAPSULE
## CONTAINING SELF-SETTING COMPOSITION

The invention relates to an anchoring capsule, preferably for use in securing a fixing element in a substrate, for example an anchor bolt in a mine wall e.g. roof and which contains at least one interactive ingredient of a self-setting composition.

The capsule may take a variety of forms.  In one version one of the ingredients is dry and is housed in the capsule and the other is liquid and is allowed to enter the capsule through a pervious or preforated wall thereof to form the self-setting composition which is released as the capsule wall falls or is broken apart.  Capsules of this general type are known from OLS 2 350 298 and British patent specification 2 004 965A; a particularly advantageous version of this type of capsule is described and claimed in our ~~international~~ european patent application ~~PCT/GB/79/0080,~~ 79300942.4 ~~publication WO 79/01144~~.

There have been numerous proposals to provide two compartment capsules containing preproportioned quantities of two interactive components of a self-setting composition packaged in such a way that they do not interact until the capsule is destroyed by the element to be fixed. We have described and claimed one such capsule in British patent specification 1 384 364 (CBP 66) and another in British patent specification 1 460 583 (CBP 65 ). Usually there is more volume of one component so that one compartment is larger than the other. The compartments may each have a wall and the skin of the capsule may be shaped to define both compartments. In one version the compartments are incomplete and the facing portions of the interactive components interact to form a limited polymerised interface to make up to the remaining portion of the compartment wall. In use, the capsule is placed in the borehole and then an anchor bolt or other element is driven in to the hole, usually with rotation, to rupture the walls, break up the compartments and release and intermix the interactive components. In our patent specification 1 382 054 (CBP   23/25) we have emphasised the need to properly dimension the relative sizes of hole diameter, bolt diameter and capsule volume.

Whichever form of capsule is adopted, there is a risk that under certain conditions the anchor element will not properly break up the capsule to release the self-setting composition. As a result, the anchorage formed will not be secure. We have observed that the risk is acute when the anchor element is relatively weak, for example, when the anchor element is non-rigid and a single compartment capsule is used or when the element is free to move off centre relative to the capsule, for example, when a relatively small diameter anchor element is to be anchored in a relatively wide diameter borehole using a two compartment· capsule.

According to one aspect of the invention there is provided for use in anchoring an anchor element in an anchor hole in a substrate, a frangible capsule containing at least one interactive component of a self setting composition bounded by a wall which is to be broken up by the anchor element to allow egress of the contained material characterised in that the wall includes areas of weakening disposed and arranged so that the wall will be broken up when the anchor element is urged into the capsule.

The areas of weakening may be defined by the score lines or marks, holes, slits or the like, arranged to extend longitudinally generally parallel to the major axis of the capsule because, in use, the anchoring element will be forced into the capsule from one end.

According to a more specific aspect of the invention there is provided an anchoring capsule for use in anchoring an element in a hole in a substrate by means of a self-setting composition comprising interactive solid and liquid components, the capsule comprising a single compartment container housing the solid interactive component of the self-setting composition, the container wall being adapted to permit ingress of the liquid interactive component characterised in that the container wall includes areas of weakening, the areas being disposed and arranged to rupture when an anchoring element is urged into the capsule.

The single compartment capsule may take a variety of forms. In one example, the container wall may be a tube formed of a porous material eg. paper or blotting paper, or a tube of a plastic material having perforations. In this case the liquid interactive component is water.

This embodiment of the invention is seen to good advantage when used to anchor a non-rigid anchor element. An example of such an element is a wire rope such as a mine haulage rope or the like. Mine haulage rope must be replaced regularly for safety reasons and in some mines the rope is cut into lengths which are used as anchor elements. The rope strands may be unwound first in which case the lengths may be kinked as well as non-rigid. Typically such ropes range from 10 mm to 25 mm in diameter and from about one to five metres long. Such wire ropes cannot be anchored easily using capsules of the prior art because it is not easy to push them into such capsules.

In use, a single compartment capsule of the invention having a dry cementitious composition is placed in water and placed end on in an anchor hole. An anchor e.g. a length of wire rope, is urged into the hole by a rectilinear motion, ie. without rotation and contacts the capsule. The wire rope anchor tends to exert an axial pressure on the capsule which stresses the areas of weakening to the point where the wall ruptures in these areas so releasing the wetted self-setting composition to fulfil its role.

The solid and dry interactive component is preferably a hydraulic cement, a plaster such as stucco, gypsum or dolomite, plaster, lime or anhydrite, and the liquid component is water. Additives may be present such as thixotropic agents, plasticisers and the like.

The capsule may range from 20 mm to 50 mm in diameter and 100 mm to 1000 mm in length. The dimensions of the capsule will be related to the wire rope diameter and the borehole diameter.

FOSROC INTERNATIONAL LIMITED  6                    CBP 141/2

The areas of weakening are disposed and arranged according to the extent to which the wall would otherwise resist rupture. Our evaluations have established that a preferred arrangement comprises rows of slits, each ranging about 0.6 to 1.2 mm in length and spaced about 1.5 mm apart. When a single compartment of this embodiment is used, the dry cement does not leak out in storage and the slits tear progressively along the row when the anchor element is used to break up the capsule. It is also advantageous to formulate the self setting composition so that it will present a reduced resistance.

According to another more specific aspect of the invention there is provided a capsule having at least two compartments, each compartment containing an interactive component of a self-setting composition, one compartment being relatively smaller than the other, characterised in that the common wall portion of the compartments is weakened so as to encourage rupture of that wall portion when a compressive force is applied to the capsule.

Typically the capsule is elongate and the compartments are arranged longitudinally and generally parallel. Most usually one compartment is much smaller than the other and is arranged as an inscribed circle adjacent the circumference of the major circle. In such a case, with a relatively small diameter anchor element aligned with the longitudinal centre of the capsule there is a serious risk that the wall of the inscribed circle will not be broken by the rotating element, especially when the hole diameter is relatively larger, allowing the capsule to move radially in the borehole.  In the two compartment capsule of the invention there is a high chance that the interactive component of the inscribed circle will be urged out of its compartment even if the wall thereof is not wholly ruptured.

The embodiment of the invention is seen to good advantage when the relative diameters are as follows: capsule diameter:  38 mm, borehole diameter:  45 mm, and anchor element diameter:  25 mm.

The invention further includes a method of anchoring using capsules of the invention.  Thus, the invention also provides a method of anchoring an anchor element using a single compartment capsule characterised in that the single compartment capsule is immersed in water and then placed into a borehole, and and anchor element is urged into the hole by a rectilinear motion to cause the element to open the wall in the areas of weakening to cause the wetted self-setting composition to egress from the capsule.  The invention further includes a method of anchoring an anchor element in a borehole using a two compartment capsule characterised in that the two compartment capsule is placed
in a borehole, and an anchor element is urged into the hole
to cause the element to open the common wall in the areas of
the weakening to cause the interactive component e.g. the
catalyst in the smaller compartment to egress therefrom into
the major compartment.

In order that the invention may be well understood it will
now be described with reference to the accompanying
diagrammatic drawings, in which

      Figure 1 is a side elevation of a single compartment
      capsule containing a dry cementitious material;
      Figure 2 is a sectional view showing the capsule in
      use;
      Figure 3 is a longitudinal sectional view of a two
      compartment capsule containing the interactive
      components of a resin based self-setting
      composition, and
      Figure 4 is a transverse sectional view taken on
      lines IV-IV of Figure 3 in a borehole.

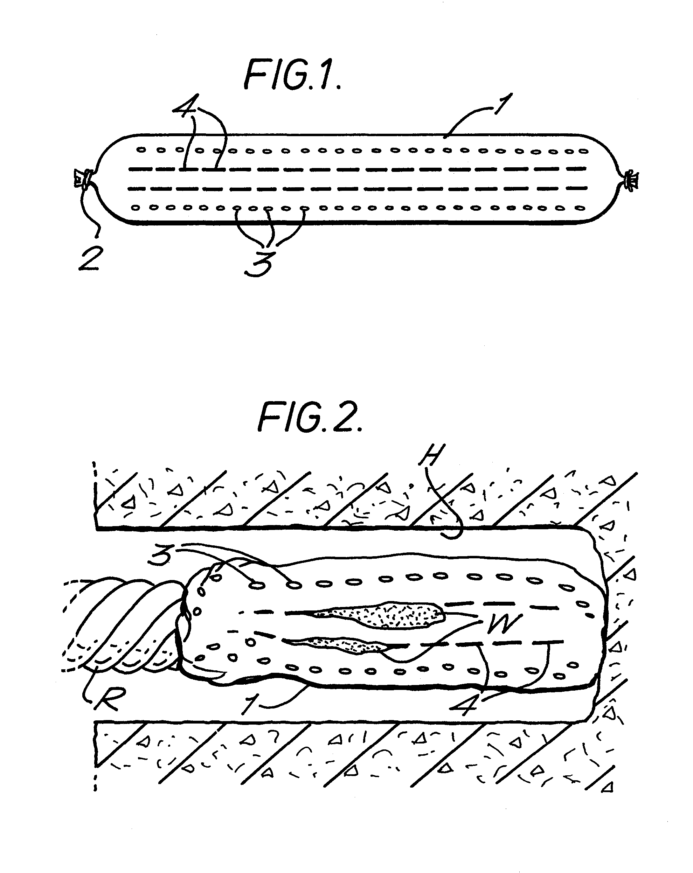

The capsule of Figures 1 and 2 comprises a tube of plastics
film 1, preferably a saturated polyester film, sealed at
each end by a metal clip 2.  The body of the capsule is
filled with a dry cementitious powder composition.  The wall of the tube is perforated by holes 3, dimensioned and shaped
to prevent egress of the dry cementitious powder and yet
allow water to enter when the capsule is immersed in water.
The capsule is of the type described and claimed in *european* patent
*application* 79 30071442 4 (case CBP 103). According to the invention
two rows of slits or pinholes 4 are also formed in the tube
on opposite sides, the slits 4 being larger than the holes
3. In use, the capsule is wetted in water for a minute and
placed in a borehole H, Figure 2. A length of mine haulage
wire rope R is pushed into the hole H following the capsule
from one end to compress the capsule and cause the tube wall
to burst open along the lines of slits 4 to allow wet
composition W to escape. The wetted self-setting
composition egresses from the capsule through the slits 4,
even though the rope R is not as rigid as an anchor bolt and
therefore would not otherwise cause adequate rupture of the
capsule.

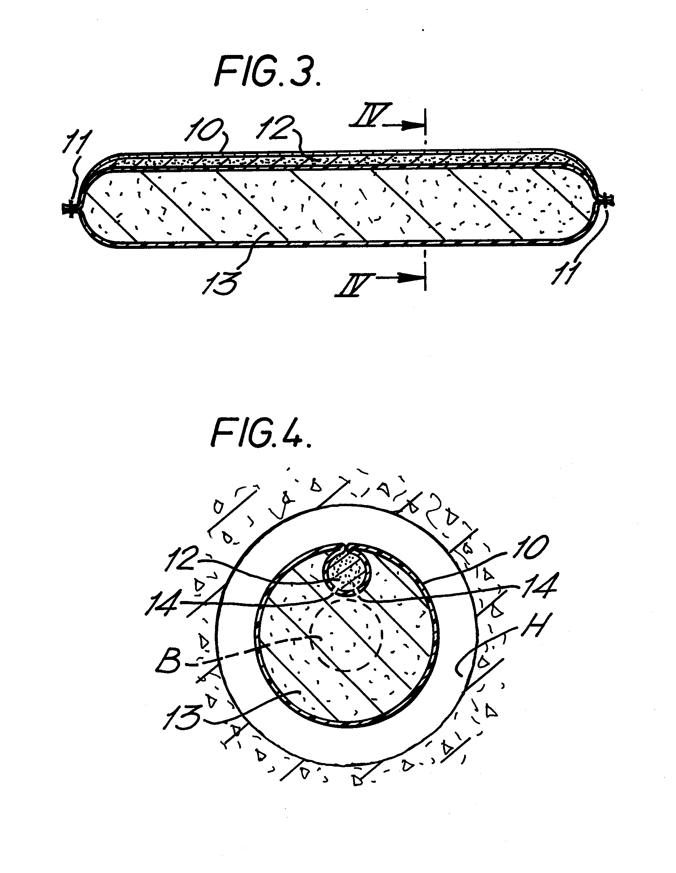

The capsule of Figures 3 and 4 comprises a tube 10 of a
plastics film, preferably a saturated polyester film, sealed
at each end by a metal clip 11. The body of the tube is
filled with sufficient volume of a mixture 13 of unsaturated
polyester, filler and accelerator so that the tube is of
generally circular cross-sectional shape. At its upper
side, the wall of the filled tube 10 is folded to define an
enclosed depression 12. The depression 12 is filled with a hardener paste mixture of a peroxide (such as benzoyl peroxide) and filler. The mouth of the depression 12 is sealed, eg. heat sealed. The capsule just described is the subject of patent I H60 588 (CBP 65).

The wall of the depression 12 in contact with interactive component in the main body 13 is perforated with two rows of small slits or pinholes 14. The slits 14 are small enough to have a tendency to self-seal, so that, at rest, the catalyst paste in the depression 12 tends to stay within the depression. In use, when a capsule according to Figures 3 and 4 and say 38 mm in diameter is used to anchor a bolt B 25 m in diameter in a borehole H about 45 mm in diameter, the pressure caused by the rotating bolt tends to compress the depression 12 so squeezing the catalyst through the slits 14 into the main body 13. This pressure causes the slits to rip apart longitudinally, so forcing the body of the catalyst to contact the body of resin.

CLAIMS

1. For use in anchoring an anchor element in an anchor hole in a substrate, a frangible capsule containing at least one interactive component of a self setting composition bounded by a wall which is to be broken up by the anchor element to allow egress of the contained material <u>characterised in that</u> the wall includes areas of weakening disposed and arranged so that the wall be broken up when the anchor element is urged into the capsule.

2. A capsule according to Claim 1 <u>characterised in that</u> the areas of weakening comprise score lines or marks, holes, slits or the like which extend longitudinally generally parallel to the major axis of the capsule.

3. A capsule according to Claim 1 or 2 <u>characterised in that</u> the areas of weakening comprise rows of slits, each ranging from about 0.6 to 1.2 mm in length and spaced about 1.5 mm apart.

4. A capsule according to Claim 1, 2 or 3 <u>characterised in</u>

that the capsule comprises a single compartment container housing the solid interactive component of the self-setting composition, the container wall being adapted to permit ingress of the liquid interactive component and the areas of weakening are present in the container wall.

5. A capsule according to Claim 4 characterised in that the container wall is a tube formed of a porous material eg. paper or blotting paper or a plastic material having perforations.

6. A capsule according to Claim 4 or 5 characterised in that the capsule ranges from 20 mm to 50 mm in diameter and 100 mm to 1000 mm in length.

7. A capsule according to Claim 1, 2 or 3 characterised in that two compartments are present, each compartment containing an interactive component of a self-setting composition, one compartment being relatively smaller than the other, and in that the areas of weakening are present in the common wall portion of the compartments.

8. A method of anchoring an anchor element in a borehole using a capsule according to any of Claims 1 to 6 characterised in that the single compartment capsule is immersed in water and then placed into a borehole, and an anchor element is urged into the hole by a rectilinear motion to cause the element to open the wall in the areas of weakening to cause the wetted self-setting composition to egress from the capsule into the borehole.

9. A method according to Claim 8 characterised in that the anchor element is non-rigid, e.g. a length of mine wire rope.

10. A method of anchoring an anchor element in a borehole using a capsule according to Claims 1 and 7 characterised in that the two compartment capsule is placed in a borehole, and an anchor element is urged into the hole to cause the element to open the areas of the weakening in the common wall to cause the interactive component in the one compartment to egress therefrom into the other compartment.

11. An anchor element when anchored by a method according to Claim 8, or 9, or 10.

FIG.1.

FIG.2.

FIG.3.

FIG.4.

0126534

**European Patent Office**

# EUROPEAN SEARCH REPORT

Application number

EP 84 30 2250

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | GB-A-2 076 920  (SA D'EXPLOSIFS ET DE PRODUITS CHIMIQUES) <br> * Abstract, last line * | 1,2 | E 21 D   21/00 |
| | --- | | |
| Y | DE-A-1 458 669 (BERGWERKSVERBAND) <br> * Page 6, paragraph 2; claim 11 * | 1 | |
| | --- | | |
| D,Y | DE-A-2 350 298  (GOLDENBERG) <br> * Claims 1, 2 * | 1,4,5 | |
| | --- | | |
| Y | DE-A-2 705 484  (UPAT-MAX LANGENSIEPEN) <br> * Claim 7 * | 1,2 | |
| | --- | | |
| Y | FR-A-2 034 130  (CELTITE) <br> * Claim 1 * | 1 | **TECHNICAL FIELDS SEARCHED (Int. Cl. 3)** |
| | --- | | |
| Y | FR-A-2 473 108  (CELTITE) <br> * Claim 16 * | 1,4,5 | E 21 D   20/00 <br> E 21 D   21/00 <br> E 21 F   17/00 <br> F 16 B   13/14 |
| | --- | | |
| Y | GB-A-  953 056 (BERGWERKSVERBAND GMBH) <br> * Figure 1 * | 4,5 | |
| | ----- | | |

The present search report has been drawn up for all claims

| Place of search | Date of completion of the search | Examiner |
|---|---|---|
| BERLIN | 05-07-1984 | ZAPP E |

EPO Form 1503. 03.82